# EUROPÄISCHE PATENTANMELDUNG

(11) **EP 4 497 319 A1**
(43) Veröffentlichungstag der Anmeldung: **29.01.2025**
(21) Anmeldenummer: 24176995.9
(22) Anmeldetag: 21.05.2024
(51) Int. Cl.: A01D 41/127, A01D 43/08, A01D 57/20

(54) **STEUERUNGSVORRICHTUNG ZUR ANSTEUERUNG EINES SELBSTFAHRENDEN MÄHDRESCHERS**

(30) Priorität: 27.07.2023 DE 102023119957
(71) Anmelder: CLAAS Selbstfahrende Erntemaschinen GmbH, 33428 Harsewinkel (DE)
(72) Erfinder: Neitemeier, Dennis, 59510 Lippetal (DE); Füchtling, Christian, 48317 Drenstein Rinkerode (DE); Spiekermann, Sebastian, 48346 Ostbevern (DE); Irmer, Daniel, 33442 Herzebock-Clarholz (DE)
(74) Vertreter: CLAAS 365FarmNet GmbH

(57) **Zusammenfassung**

Die vorliegende Erfindung betrifft eine Steuerungsvorrichtung (45) zur Ansteuerung eines selbstfahrenden Mähdreschers (1), welcher ein mehrere, mit einer Bandgeschwindigkeit (VL, VR, VM) angetriebene, Förderbänder (38, 39, 40) aufweisendes Bandschneidwerk (2) zur Aufnahme und Förderung von Erntegut zu einer Fördervorrichtung (5) im Einzugskanal des Mähdreschers (1), mehrere dem Einzugskanal nachgeordnete Arbeitsaggregate zur Bearbeitung des aufgenommenen Ernteguts sowie einen Antriebsmotor (44) zum Antreiben des Bandschneidwerks (2), der Fördervorrichtung (5), der Arbeitsaggregate sowie eines Fahrantriebs (46) zum Betreiben des Mähdreschers (1) mit einer durch die Steuerungsvorrichtung (44) regelbaren Fahrgeschwindigkeit (VF) umfasst, wobei die Steuerungsvorrichtung (45) dazu ausgeführt und eingerichtet ist, die Auslastung des Antriebsmotors (44) während des Erntebetriebs zu bestimmen und beim Passieren eines in der Steuerungsvorrichtung (45) hinterlegten oder hinterlegbaren ersten Grenzwertes (55) für eine Grenzauslastung des Antriebsmotors (44) die Bandgeschwindigkeit (VL, VR, VM) der Förderbänder (38, 39, 40) des Bandschneidwerks (2) automatisch zu reduzieren.

## Beschreibung

Die vorliegende Erfindung betrifft eine Steuerungsvorrichtung zur Ansteuerung eines selbstfahrenden Mähdreschers gemäß dem Oberbegriff des Anspruches 1. Weiterhin sind ein selbstfahrender Mähdrescher sowie ein Verfahren zur Ansteuerung eines selbstfahrenden Mähdreschers Gegenstand der vorliegenden Erfindung.

Aus der EP 2 377 385 B1 ist ein Verfahren zur Feststellung eines sich an einem Arbeitsorgan eines mehrere Arbeitsaggregate aufweisenden selbstfahrenden Mähdreschers ausbildenden Erntegutstaus bekannt Die Ausbildung des Erntegutstaus wird durch die Auswertung eines Parameters, welcher der Überwachung des Betriebszustandes eines der Arbeitsaggregate des Mähdreschers dient, und den Vergleich mit einem Schwellwert für diesen Parameter, der für einen sich ausbildenden Erntegutstau an diesem Arbeitsorgan charakteristisch ist, bestimmt. Die Detektion eines sich anbahnenden Gutstaus führt zu einer Ansteuerung der dem betreffenden Arbeitsaggregate vorgelagerten Arbeitsaggregate, um die Zuführung der Erntegutmenge zu reduzieren. Als solcher Parameter wird die Drehzahl des Arbeitsaggregates, an welchem sich der Erntegutstau ausbildet, überwacht. Bei einem Passieren eines ersten Schwellwertes für einen Drehzahlabfall wird zunächst zumindest eine den Erntebetrieb der Erntemaschine beeinflussende Einstellung verändert, die zu einer Reduzierung der zu verarbeitenden Erntegutmenge führt, während die Einstellungen des von dem Erntegutstau betroffenen Arbeitsaggregates unverändert bleiben. Dies soll dazu dienen, dem von einem Erntegutstau betroffenen Arbeitsaggregat Zeit zugeben, das bereits im Arbeitsaggregat befindliche Erntegut zu bearbeiten, um auf diese Weise einen Stau zu vermeiden. Unterstützend wird die Fahrgeschwindigkeit reduziert, wodurch die Aufnahme an Erntegut reduziert wird.

Die DE 10 2016 115 589 A1 beschreibt einen Mähdrescher mit einem Bandschneidwerk, wobei die Bandgeschwindigkeiten der Förderbänder des Bandschneidwerksdurch durch eine Steuerungsvorrichtung in Abhängigkeit von der Fahrgeschwindigkeit des Mähdreschers angesteuert wird. Die Bandgeschwindigkeiten lassen sich durch eine manuelle Vorgabe reduzieren, um auf lokal auftretende geringere Bestandsdichten zu reagieren, um den Erntegutstrom zu vergleichmäßigen.

Dem Stand der Technik ist gemeinsam, dass im Fall einer automatischen Steuerung der Fahrgeschwindigkeit des Mähdreschers diese in Abhängigkeit vom Durchsatz der Fördervorrichtung im Einzugskanal angesteuert wird. Die Bestimmung des Erntegutdurchsatzes erfolgt bezogen auf den Zeitpunkt der Aufnahme des Erntegutes durch das Bandschneidwerk zeitlich versetzt. Diese Vorgehensweise zur Steuerung der Fahrgeschwindigkeit des Mähdreschers kann dazu führen, dass es aufgrund von sprunghaft ansteigendem Erntegutdurchsatz zu einer Situation kommt, in welcher durch die Steuerungsvorrichtung auf einen sich anbahnenden Gutstau reagiert wird, was zu einem Stillstand des Mähdreschers führen kann.

Ausgehend vom vorstehend genannten Stand der Technik liegt der Erfindung die Aufgabe zugrunde, eine Steuerungsvorrichtung sowie ein Verfahren zur Ansteuerung eines selbstfahrenden Mähdreschers bereitzustellen, welche sich durch ein verbessertes Ansteuerungsverhalten bei einem sprunghaft ansteigenden Erntegutdurchsatz auszeichnet.

Diese Aufgabe wird erfindungsgemäß durch eine Steuerungsvorrichtung mit den Merkmalen des Anspruches 1, einen selbstfahrenden Mähdrescher mit den Merkmalen des nebengeordneten Anspruches 11 sowie ein Verfahren zur Ansteuerung eines selbstfahrenden Mähdreschers mit den Merkmalen des Anspruches 14 gelöst. Vorteilhafte Weiterbildungen sind Gegenstand der abhängigen Ansprüche.

Gemäß dem Anspruch 1 wird eine Steuerungsvorrichtung zur Ansteuerung eines selbstfahrenden Mähdreschers vorgeschlagen, welcher ein mehrere, mit einer Bandgeschwindigkeit angetriebene, Förderbänder aufweisendes Bandschneidwerk zur Aufnahme und Förderung von Erntegut zu einer Fördervorrichtung im Einzugskanal des Mähdreschers, mehrere dem Einzugskanal nachgeordnete Arbeitsaggregate zur Bearbeitung des aufgenommenen Ernteguts sowie einen Antriebsmotor zum Antreiben des Bandschneidwerks, der Fördervorrichtung, der Arbeitsaggregate sowie eines Fahrantriebs zum Betreiben des Mähdreschers mit einer durch die Steuerungsvorrichtung regelbaren Fahrgeschwindigkeit umfasst. Erfindungsgemäß ist vorgesehen, dass die Steuerungsvorrichtung dazu ausgeführt und eingerichtet ist, die Auslastung des Antriebsmotors während des Erntebetriebs zu bestimmen und beim Passieren eines in der Steuerungsvorrichtung hinterlegten oder hinterlegbaren ersten Grenzwertes für eine Grenzauslastung des Antriebsmotors die Bandgeschwindigkeit der Förderbänder des Bandschneidwerks automatisch zu reduzieren.

Dem liegt die Überlegung zugrunde, dass auf eine Betriebssituation, in welcher ein sprunghaftes Ansteigen des Erntegutdurchsatzes dazu führt, dass der Mähdrescher sich der Grenzauslastung des Antriebsmotors nähert, die Bandgeschwindigkeit der Förderbänder reduziert wird, sodass der Volumenstrom, welcher dem Mähdrescher vom Bandschneidwerk zugeführt wird, verringert wird.

Eine solche Betriebssituation kann beispielsweise auftreten, wenn der Mähdrescher eine Senke auf einem Feld durchfährt, in der es aufgrund einer höheren Wasserverfügbarkeit zu einem temporär höheren Erntegutertrag und damit Erntegutdurchsatz kommt, als dies vor der Senke der Fall ist.

Insbesondere kann in der Steuerungsvorrichtung ein zweiter Grenzwert für die Grenzauslastung des Antriebsmotors hinterlegt oder hinterlegbar sein, der größer als der erste Grenzwert ist. Der zweite Grenzwert kann dazu dienen, eine Betriebssituation zu berücksichtigen, in der die Reduzierung der Bandgeschwindigkeit der Förderbänder des Bandschneidwerks alleine nicht mehr ausreicht, um die temporäre Mehrbelastung durch das aufgenommene Erntegut zu kompensieren.

Dabei kann die Steuerungsvorrichtung dazu eingerichtet sein, beim Erreichen des zweiten Grenzwertes die Fahrgeschwindigkeit durch die Ansteuerung des Fahrantriebes abzusenken und einen jeweiligen Antriebsstrang von Bandschneidwerk und Fördervorrichtung zu unterbrechen.

Gemäß einer Weiterbildung kann die Steuerungsvorrichtung dazu eingerichtet sein, beim Erreichen des ersten Grenzwertes die Fahrgeschwindigkeit durchsatzabhängig abzusenken. Hierdurch kann die durch die erfindungsgemäße Ansteuerung der Bandgeschwindigkeit der Förderbänder erreichte reduzierte Erntegutzuführung durch das Bandschneidwerk ergänzt werden, indem für die Dauer der Ansteuerung das Bandschneidwerk als solches entlastet wird.

Bevorzugt kann die Steuerungsvorrichtung dazu eingerichtet sein, die Antriebsdrehzahl von Messerbalken und Einzugsschnecke des Bandschneidwerks zu verringern. Diese Maßnahme kann zu einer Reduzierung der Auslastung des Antriebsmotors beitragen. Ebenso kann diese Maßnahme zu einer Reduzierung der den dem Einzugskanal nachgeordneten Arbeitsaggregaten zugeführten Erntegutmenge beitragen.

Besonders vorteilhaft ist es, wenn die Steuerungsvorrichtung dazu eingerichtet ist, die Bandgeschwindigkeit der Förderbänder und die Antriebsdrehzahl von Messerbalken und Einzugsschnecke des Bandschneidwerks durch die Ansteuerung von Aktuatoren zum Antreiben der Förderbänder, des Messerbalkens und der Einzugsschnecke unabhängig voneinander zu verändern. Hierdurch kann flexibler auf Schwankungen der vom Bandschneidwerk aufgenommenen Erntegutmenge, sowohl bei einer Zunahme als auch einer Abnahme der Erntegutmenge, reagiert werden.

Insbesondere kann die Steuerungsvorrichtung dazu eingerichtet sein, die Fahrgeschwindigkeit des Mähdreschers durchsatzabhängig zu steuern oder zu regeln. Dies ermöglicht einen Betrieb des Mähdreschers im Wesentlichen im Grenzbereich der Auslastung des Antriebsmotors, um eine möglichst hohe Kampagnenleistung zu erreichen.

Bevorzugt kann die Steuerungsvorrichtung dazu eingerichtet sein, von einer im Einzugskanal angeordneten Sensoranordnung Signale zur Bestimmung des Erntegutdurchsatzes zu empfangen und auszuwerten.

Alternativ oder zusätzlich kann die Steuerungsvorrichtung dazu eingerichtet sein, von zumindest einer dem Mähdrescher zugeordneten Verlustsensoranordnung Signale zur Bestimmung von Erntegutverlusten zu empfangen und auszuwerten und die Fahrgeschwindigkeit des Mähdreschers in Abhängigkeit von den detektierten Erntegutverlusten zu steuern oder zu regeln.

Gemäß einer bevorzugten Weiterbildung kann die Steuerungsvorrichtung dazu eingerichtet sein, den Mährescher in unterschiedlichen, einstellbaren Fahrmodi zu betreiben, wobei ein Fahrmodus eine konstante Fahrgeschwindigkeit vorgibt, für welchen eine einzuhaltende Sollfahrgeschwindigkeit vorgegeben wird, ein Fahrmodus einen konstanten Erntegutdurchsatz vorgibt, für welchen ein Sollerntegutdurchsatz vorgegeben wird, um die Fahrgeschwindigkeit anzupassen, oder ein Fahrmodus einen konstanten Erntegutdurchsatz bei vorgegebenem Verlustniveau vorgibt, für welchen ein Sollerntegutdurchsatz und ein einzuhaltendes Sollverlustniveau vorgegeben wird, um die Fahrgeschwindigkeit anzupassen.

Die eingangs gestellte Aufgabe wird gemäß Anspruch 11 durch einen selbstfahrenden Mähdrescher mit einer Steuerungsvorrichtung gelöst, wobei die Steuerungsvorrichtung nach einem der vorangehenden Ansprüche ausgebildet ist.

Insbesondere kann das Bandschneidwerk einen Messerbalken, mehrere angetriebene Förderbänder sowie eine Einzugsschnecke aufweisen, wobei der Messerbalken und die Einzugsschnecke mechanisch und die Förderbänder hydraulisch angetrieben sind. Das Vorsehen unterschiedlicher Antriebsarten durch einen mechanischen Antriebsstrang und einen hydraulischen Antriebsstrang ermöglicht eine voneinander unabhängige Ansteuerung von Messerbalken und Einzugsschnecke einerseits und den angetriebenen Förderbändern andererseits, um individueller auf Schwankungen in der Bestandsdichte und/oder der Fahrgeschwindigkeit reagieren zu können.

Des Weiteren können die angetriebenen Förderbänder des Bandschneidwerks mit voneinander unabhängig einstellbaren Bandgeschwindigkeiten betreibbar sein.

Weiterhin wird die eingangs gestellte Aufgabe durch ein Verfahren mit den Merkmalen de nebengeordnete Anspruchs 14 gelöst.

Gemäß dem Anspruch 14 wird ein Verfahren zur Ansteuerung eines selbstfahrenden Mähdreschers vorgeschlagen, welcher ein mehrere, mit einer Bandgeschwindigkeit angetriebene, Förderbänder aufweisendes Bandschneidwerk zur Aufnahme und Förderung von Erntegut zu einer Fördervorrichtung im Einzugskanal des Mähdreschers, mehrere dem Einzugskanal nachgeordnete Arbeitsaggregate zur Bearbeitung des aufgenommenen Ernteguts sowie einen Antriebsmotor, durch den das Bandschneidwerk, die Arbeitsaggregate sowie ein Fahrantrieb angetrieben werden, umfasst. Erfindungsgemäß ist vorgesehen, dass die Auslastung des Antriebsmotors während des Erntebetriebs durch die Steuerungsvorrichtung bestimmt wird und dass beim Passieren eines in der Steuerungsvorrichtung hinterlegten oder hinterlegbaren ersten Grenzwertes für eine Grenzauslastung des Antriebsmotors die Bandgeschwindigkeit der Förderbänder des Bandschneidwerks reduziert wird. Auf die erfindungswesentlichen Vorteile der Steuerungsvorrichtung nach den Ansprüchen 1 bis 10 und des Mähdreschers nach den Ansprüchen 11 bis 13 darf verwiesen werden.

Die vorliegende Erfindung wird nachstehend anhand eines in den Zeichnungen dargestellten Ausführungsbeispieles näher erläutert.

Es zeigen:
- Fig. 1: schematisch und exemplarisch eine Teilansicht eines Mähdreschers;
- Fig. 2: schematisch und exemplarisch eine Ansicht eines Bandschneidwerks;
- Fig. 3: schematisch und exemplarisch eine vereinfachte Übersichtsdarstellung von Arbeitsaggregaten, Antriebsmotor und Steuerungsvorrichtung des Mähdreschers; und
- Fig. 4: schematisch und exemplarische eine Darstellung einer Steuerung des Mähdreschers durch die Steuerungsvorrichtung.

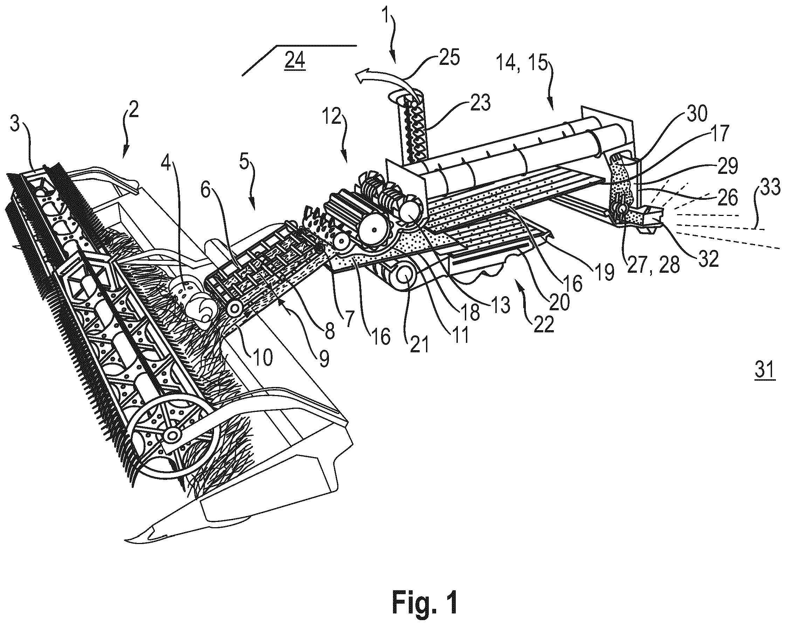

In Fig. 1 ist schematisch und exemplarisch eine Teilansicht eines selbstfahrender Mähdrescher 1 dargestellt. Der Mähdrescher 1 nimmt in seinem frontseitigen Bereich ein als Bandschneidwerk 2 ausgeführtes Vorsatzgerät auf, welches in an sich bekannter Weise mit einer im Einzugskanal des Mähdreschers 1 angeordneten Fördervorrichtung 5 verbunden ist. Das Bandschneidwerk 2 weist eine an Tragarmen angeordnete Haspel 3 sowie eine der Fördervorrichtung 5 vorgeordnete Einzugswalze 4 auf.

Förderorgane 6 der als Schrägförderer ausgeführten Fördervorrichtung 5 werden obenseitig um eine Schwenkachse 7 quer zur Längsrichtung des Mähdreschers 2 schwenkbeweglich geführt. Im Einzugskanal ist eine Sensoranordnung 8 angeordnet, die Signale zur Bestimmung des Erntegutdurchsatzes bereitstellt. Im dargestellten Ausführungsbeispiel ist hierzu den Förderorganen 6 in einem mittigen Bereich eine an sich bekannte Schichthöhenwalze als Sensoranordnung 8 zugeordnet. Die Auslenkung der als Schichthöhenwalze ausgeführten Sensoranordnung 8 in vertikaler Richtung ist ein Maß für eine Schichthöhe 9 eines die Fördervorrichtung 5 durchlaufenden Erntegutstroms 10.

Der die Fördervorrichtung 5 durchlaufende Erntegutstrom 10 wird in dem obenseitigen, rückwärtigen Bereich der Fördervorrichtung 5 an untenseitig zumindest teilweise von einem sogenannten Dreschkorb 11 ummantelten Dreschorganen 12 des Mähdreschers 1 übergeben. Eine den Dreschorganen 12 nachgeordnete Umlenktrommel 13 lenkt den im rückwärtigen Bereich der Dreschorgane 12 aus diesen austretenden Erntegutstrom 10 so um, dass er unmittelbar an eine als Abscheiderotoranordnung 14 ausgeführte Trenneinrichtung 15 übergeben wird. Es liegt im Rahmen der Erfindung, dass die Trenneinrichtung 15 auch als an sich bekannter und deshalb nicht dargestellter Hordenschüttler ausgeführt sein kann. Auch liegt es im Rahmen der Erfindung, dass die Abscheiderotoranordnung 14 nur mit einem Abscheiderotor ausgeführt ist oder dass die Dreschorgane 12 und die Trenneinrichtung 15 zu einer ein- oder zweirotorigen Axialflussdresch- und Trenneirichtung zusammengefasst sind.

In der Trenneinrichtung 15 wird der Erntegutstrom 10 so gefördert, dass in dem Erntegutstrom 10 enthaltene freibewegliche Körner 16 im untenseitigen Bereich der Trenneinrichtung 15 abgeschieden werden. Sowohl die am Dreschkorb 11 als auch in der Trenneinrichtung 15 abgeschiedenen Körner 16 werden über Rücklaufboden 17 und Zuführboden 18 einer aus mehreren Siebebenen 19, 20 und einem Gebläse 21 bestehenden Reinigungseinrichtung 22 zugeführt. Der gereinigte Körnerstrom 25 wird schließlich mittels eines Elevators 23 an einen Korntank 24 übergeben.

Im rückwärtigen Bereich der Trenneinrichtung 15 ist dieser eine von einem trichterförmigen Gehäuse 26 ummantelte, als Strohhäcksler 27 ausgeführte Zerkleinerungseinrichtung 28 zugeordnet. Dem Strohhäcksler 27 wird obenseitig die Trenneinrichtung 15 im rückwärtigen Bereich verlassendes Stroh 30 zugeführt. Mittels einer verschwenkbaren Strohleitklappe 29 kann das Stroh 30 auch so umgelenkt werden, dass es direkt auf dem Boden 31 in einem Schwad abgelegt wird.

Im Austrittsbereich des Strohhäckslers 27 werden der aus dem zerkleinerten Stroh 30 bestehende Gutstrom und die in der Reinigungseinrichtung 22 abgeschiedenen Nichtkornbestandteile an eine Gutverteileinrichtung 32 übergeben. Die Gutverteileinrichtung 32 gibt einen sich im Wesentlichen aus dem Stroh 30 und den Nichtkornbestandteilen zusammensetzenden Restmaterialstrom 33 in der Weise ab, dass es zu einer Breitverteilung des Restmaterialstroms 33 auf dem Boden 31 kommt.

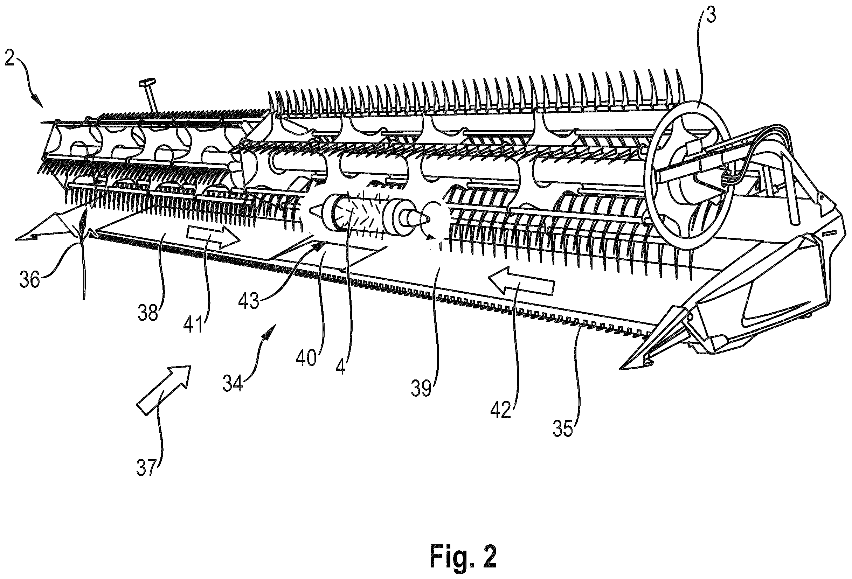

Die Darstellung in Fig. 2 zeigt schematisch und exemplarisch eine Ansicht des Bandschneidwerks 3. In einem Erntegutbestand 36 zugewandten eingangsseitigen Bereich 34 weist das Bandschneidwerk 3 einen Messerbalken 35 auf, der den zu erntenden Erntegutbestand 36 abtrennt. Der Messerbalken 35 kann entweder starr oder flexibel ausgeführt sein. Denkbar ist auch, dass der flexibel ausgeführte Messerbalken 35 starr betreibbar ist. Ein flexibel ausgeführter Messerbalken 35 kann dabei in bekannter Weise Bodenkonturänderungen in Längs- und Querrichtung besser folgen. Dem Messerbalken 35 sind im dargestellten Ausführungsbeispiel in Zuführrichtung 37 des abgeernteten Erntegutbestands 36 gesehen jeweils zumindest ein linksseitiges Förderband 38, zumindest ein rechtsseitiges Förderband 39 und ein mittiges Förderband 40 nachgeordnet. Das linksseitige Förderband 38 fördert den von ihm erfassten abgeernteten Erntegutbestand 36 gemäß Pfeilrichtung 41 in Richtung des mittigen Förderbandes 40 und übergibt ihn an dieses. In analoger Weise fördert das rechtsseitige Förderband 39 den von ihm erfassten abgeernteten Erntegutbestand 36 gemäß Pfeilrichtung 42 ebenfalls in Richtung des mittigen Förderbandes 40 und übergibt ihn an dieses. Das mittige Förderband 40 fördert sodann den von ihm erfassten und von den Förderbändern 38, 39 an das Förderband 40 übergebenen Erntegutbestand 36 in den rückwärtigen Bereich des Bandschneidwerks 2 gemäß Pfeilrichtung 43. In diesem rückwärtigen Bereich wird der Erntegutbestand 36 von der diesem Bereich zugeordneten rotierenden Einzugswalze 4 erfasst und als der bereits erwähnte Erntegutstrom 10 an die Fördervorrichtung 5 im Einzugskanal des Mähdreschers 1 übergeben.

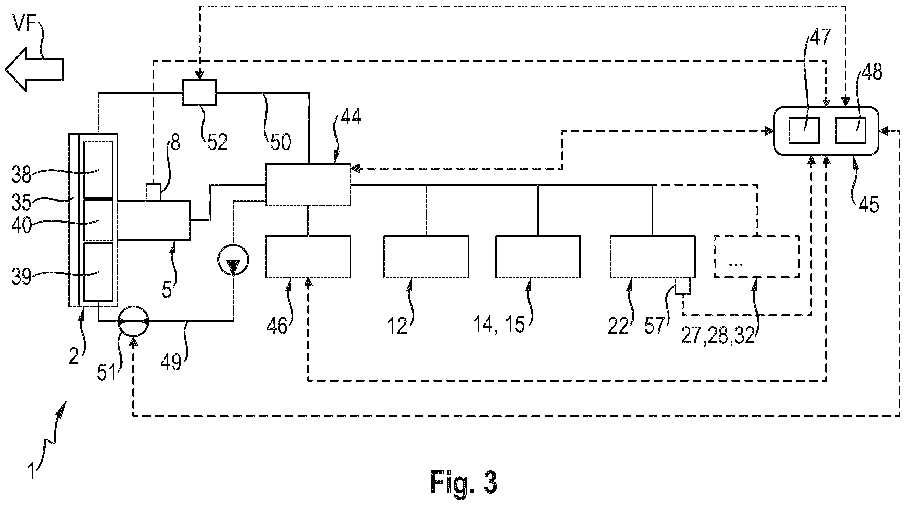

In Fig. 3 ist schematisch und exemplarisch eine vereinfachte Übersichtsdarstellung der Arbeitsaggregate, eines Antriebsmotors 44 und einer Steuerungsvorrichtung 45 für den Mähdrescher 1 dargestellt. Mittels der Steuerungsvorrichtung 45 wird der selbstfahrende Mähdrescher 1 angesteuert. Die Steuerungsvorrichtung 45 umfasst eine Speichereinheit 47 und ein Recheneinheit 48.

Der Antriebsmotor 44 ist in der Regel als Verbrennungsmotor ausgeführt. Neben dem Bandschneidwerk 2, der Fördervorrichtung 5 im Einzugskanal, und den der Fördervorrichtung 5 nachgeordneten Arbeitsaggregate treibt der Antriebsmotor 44 einen insbesondere hydrostatischen Fahrantrieb 46 des Mähdreschers 1 an, um diesen mit einer steuer- oder regelbaren Fahrgeschwindigkeit VF beim Erntevorgang über den Boden 31 zu bewegen.

Die Förderbänder 38, 39, 40 des Bandschneidwerks 2 werden hier und vorzugsweise hydraulisch angetrieben. Hierzu sind die Förderbänder 38, 39, 40 mit einem hydraulischen Antriebsstrang 49 verbunden. Die Förderbänder 38, 39, 40 weisen jeweils einen ansteuerbaren oder regelbaren Aktuator 51 auf, der bevorzugt als Hydromotor ausgeführt ist. Die einzelnen Aktuatoren 51 der Förderbänder 38, 39, 40 werden von der Steuerungsvorrichtung 45 angesteuert. Der Antrieb der Förderbänder 38, 39, 40 erfolgt mit einer Bandgeschwindigkeit VL für das linksseitige Förderband 38, mit einer Bandgeschwindigkeit VM für das mittige Förderband 40 und mit einer Bandgeschwindigkeit VR für das rechtsseitige Förderband 39. Die Bandgeschwindigkeiten VL, VM und VR können durch die individuelle Ansteuerung der Aktuatoren 51 voneinander unabhängig angepasst werden.

Der Messerbalken 35, die Haspel 3 sowie die Einzugsschnecke 4 werden unabhängig von den Förderbändern 38, 39, 40 vorzugsweise mechanisch angetrieben. Hierzu sind der Messerbalken 35, die Haspel 3 sowie die Einzugsschnecke 4 durch einen mechanischen Antriebsstrang 50 mit dem Antriebsmotor 44 verbunden. Der mechanische Antriebsstrang 50 kann als ansteuerbaren oder regelbaren Aktuator 52 ein Getriebe umfassen. Der Aktuator 52 wird von der Steuerungsvorrichtung 45 angesteuert.

Die Steuerungsvorrichtung 45 steht durch Signalleitungen mit dem Antriebsmotor 44, dem Fahrantrieb 46 sowie den ansteuerbaren Aktuatoren 51 des hydraulischen Antriebsstrangs 49 und dem Aktuator 52 des mechanischen Antriebsstrangs 50 zum Empfang von Betriebsparametern und zur Übersendung von Steuerbefehlen in Verbindung. Die Steuerungsvorrichtung 45 steht zudem durch eine Signalleitung mit der im Einzugskanal angeordneten Sensoranordnung 8 zur Bestimmung des Erntegutdurchsatzes in Verbindung. Die Steuerungsvorrichtung 45 ist dazu eingerichtet, ein von der Sensoranordnung 8 generiertes Signal die Schichthöhe 9 im Einzugskanal betreffend fortlaufend auszuwerten.

Die Steuerungsvorrichtung 45 ist dazu eingerichtet, den selbstfahrenden Mähdrescher 1 in unterschiedlichen Fahrmodi zu betreiben. Die unterschiedlichen Fahrmodi sind einstellbar. Als ein Fahrmodus ist eine konstante Fahrgeschwindigkeit VF vorgeben, bei welchem eine Sollfahrgeschwindigkeit vorgegeben wird. Ein alternativer Fahrmodus gibt einen konstanten Erntegutdurchsatz vor, bei welchem ein Sollerntegutdurchsatz vorgegeben wird, um abhängig vom Sollerntegutdurchsatz die Fahrgeschwindigkeit VF anzupassen. Ein weiterer Fahrmodus gibt einen konstanten Erntegutdurchsatz bei vorgegebenem Verlustniveau vor, bei welchem ein Sollerntegutdurchsatz und ein einzuhaltendes Sollverlustniveau vorgegeben wird, um die Fahrgeschwindigkeit VF in Abhängigkeit von dem Sollerntegutdurchsatz und dem einzuhaltenden Sollverlustniveau anzupassen.

Für die Ausführung des Fahrmodus, dem ein konstanter Erntegutdurchsatz bei vorgegebenem Verlustniveau zugrunde liegt, ist die Steuerungsvorrichtung 45 dazu eingerichtet, von zumindest einer dem Mähdrescher 1 zugeordneten Verlustsensoranordnung 57 Signale zur Bestimmung von Erntegutverlusten zu empfangen und auszuwerten, um die Fahrgeschwindigkeit VF des Mähdreschers 1 in Abhängigkeit von den mittels der zumindest einen Verlustsensoranordnung 57 detektierten Erntegutverlusten und dem mittels der Sensoranordnung 8 detektierten Erntegutdurchsatz zu steuern oder zu regeln. Hierzu ist die zumindest eine Verlustsensoranordnung 57 der Reinigungseinrichtung 22 nachgeordnet angeordnet.

Die unterschiedlichen Fahrmodi sind in der Speichereinheit 47 der Steuerungsvorrichtung 45 hinterlegt oder hinterlegbar. Mittels einer nicht dargestellten Benutzerschnittstelle lassen sich die verschiedenen Parameter der Fahrmodi vorgeben und verändern.

Die Steuerungsvorrichtung 45 ist dazu ausgeführt und eingerichtet, die Auslastung des Antriebsmotors 44 während des Erntebetriebs zu bestimmen und beim Passieren eines in der Steuerungsvorrichtung 45 hinterlegten oder hinterlegbaren ersten Grenzwertes 55 für eine Grenzauslastung des Antriebsmotors 44 die Bandgeschwindigkeit der Förderbänder 38, 39 ,40 des Bandschneidwerks 2 zu reduzieren.

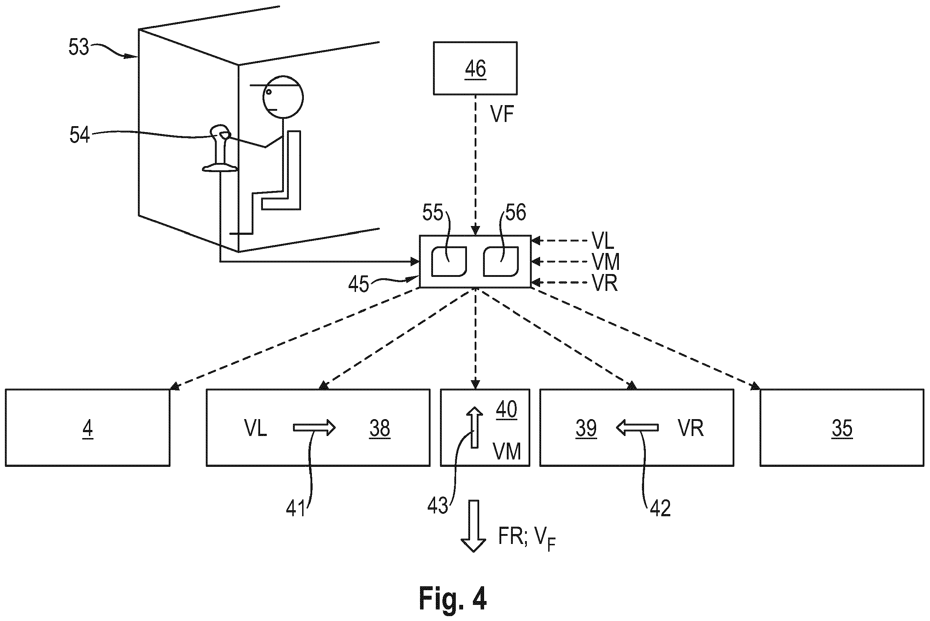

In Fig. 4 ist schematisch und exemplarische eine Darstellung einer Steuerung des Mähdreschers 1 durch die Steuerungsvorrichtung 45 gezeigt. In einer Kabine 53 des Mähdreschers 1 befindet sich zumindest ein Bedienelement 54, mit welchem die Fahrgeschwindigkeit VF respektive einer der in der Speichereinheit 47 hinterlegten Fahrmodi auswählbar und/oder einstellbar ist, um den Fahrantrieb 46 gemäß dem ausgewählten Fahrmodus anzusteuern. Mit FR ist die Fahrtrichtung bezeichnet, wenn der Mähdrescher 1 in den Erntegutbestand 36 einfährt, um diesen abzuernten.

Wird durch den Vergleich der Auslastung des Antriebsmotors 44 mit dem ersten Grenzwert 55 eine Betriebssituation detektiert, in welcher ein sprunghaftes Ansteigen des Erntegutdurchsatzes dazu führt, dass der Mähdrescher 1 sich der Grenzauslastung des Antriebsmotors 44 nähert, wird die Bandgeschwindigkeit VL, VR, VM der Förderbänder 38, 39, 40 reduziert, sodass der Volumenstrom mit bereits aufgenommenem Erntegut, welcher dem Mähdrescher 1 vom Bandschneidwerk 2 zugeführt wird, verringert wird.

In der Steuerungsvorrichtung 45 ist ein zweiter Grenzwert 56 für die Grenzauslastung des Antriebsmotors 44 hinterlegt oder hinterlegbar, der größer als der erste Grenzwert 55 ist. Der zweite Grenzwert 56 kann dazu dienen, eine Betriebssituation zu berücksichtigen, in der die Reduzierung der Bandgeschwindigkeiten VL, VR, VM der Förderbänder 38, 39 ,40 alleine nicht mehr ausreicht, um die durch das aufgenommene Erntegut hervorgerufene temporäre Mehrbelastung bei der Förderung und Bearbeitung durch die Arbeitsaggregate des Mähdreschers 1 zu kompensieren.

Insbesondere kann die Steuerungsvorrichtung 45 dazu eingerichtet sein, beim Erreichen des zweiten Grenzwertes 56 für die Auslastung des Antriebsmotors 44 die Fahrgeschwindigkeit VF durch die Ansteuerung des Fahrantriebes 46 abzusenken und den hydraulischen Antriebstrang 49 des Bandschneidwerks 2 und den Antriebsstrang der Fördervorrichtung 5 zu unterbrechen.

Gemäß einem weiteren Aspekt ist die Steuerungsvorrichtung 45 dazu eingerichtet, beim Erreichen des ersten Grenzwertes 55 die Fahrgeschwindigkeit VF durchsatzabhängig abzusenken. Hierdurch kann einem ungewollten Aufstauen des aufgenommenen Erntegutes im Bandschneidwerk 2 begegnet werden.

Des Weiteren ist die Steuerungsvorrichtung 45 dazu eingerichtet, die Antriebsdrehzahl von Messerbalken 35 und Einzugsschnecke 4 des Bandschneidwerks 2 zu verringern. Hierzu kann die Steuerungsvorrichtung 45 die Aktuatorik 52 im mechanischen Antriebsstrang 50 des Bandschneidwerks 2 ansteuern.

### Bezugszeichenliste

| | | | |
|---|---|---|---|
| 1 | Mähdrescher | 34 | Eingangsseitiger Bereich von 2 |
| 2 | Bandschneidwerk | 35 | Messerbalken |
| 3 | Haspel | 36 | Erntegutbestand |
| 4 | Einzugsschnecke | 37 | Zuführrichtung |
| 5 | Fördervorrichtung | 38 | Förderband |
| 6 | Förderorgan | 39 | Förderband |
| 7 | Schwenkachse | 40 | Förderband |
| 8 | Sensoranordnung | 41 | Pfeilrichtung |
| 9 | Schichthöhe | 42 | Pfeilrichtung |
| 10 | Erntegutstrom | 43 | Pfeilrichtung |
| 11 | Dreschkorb | 44 | Antriebsmotor |
| 12 | Dreschorgan | 45 | Steuerungsvorrichtung |
| 13 | Umlenktrommel | 46 | Fahrantrieb |
| 14 | Abscheiderotoranordnung | 47 | Speichereinheit |
| 15 | Trenneinrichtung | 48 | Recheneinheit |
| 16 | Körner | 49 | Antriebsstrang |
| 17 | Rücklaufboden | 50 | Antriebsstrang |
| 18 | Zuführboden | 51 | Aktuator |
| 19 | Siebebene | 52 | Aktuator |
| 20 | Siebebene | 53 | Kabine |
| 21 | Gebläse | 54 | Bedienelement |
| 22 | Reinigungseinrichtung | 55 | Erster Grenzwert |
| 23 | Elevator | 56 | Zweiter Grenzwert |
| 24 | Korntank | 57 | Verlustsensoranordnung |
| 25 | Körnerstrom | | |
| 26 | Gehäuse | FR | Fahrtrichtung |
| 27 | Strohhäcksler | VF | Fahrgeschwindigkeit |
| 28 | Zerkleinerungseinrichtung | VL | Bandgeschwindigkeit |
| 29 | Strohleitklappe | VM | Bandgeschwindigkeit |
| 30 | Stroh | VR | Bandgeschwindigkeit |
| 31 | Boden | | |
| 32 | Gutverteileinrichtung | | |
| 33 | Restmaterialstrom | | |

## Patentansprüche

1. Steuerungsvorrichtung (45) zur Ansteuerung eines selbstfahrenden Mähdreschers (1), welcher ein mehrere, mit einer Bandgeschwindigkeit (VL, VR, VM) angetriebene, Förderbänder (38, 39, 40) aufweisendes Bandschneidwerk (2) zur Aufnahme und Förderung von Erntegut zu einer Fördervorrichtung (5) im Einzugskanal des Mähdreschers (1), mehrere dem Einzugskanal nachgeordnete Arbeitsaggregate zur Bearbeitung des aufgenommenen Ernteguts sowie einen Antriebsmotor (44) zum Antreiben des Bandschneidwerks (2), der Fördervorrichtung (5), der Arbeitsaggregate sowie eines Fahrantriebs (46) zum Betreiben des Mähdreschers (1) mit einer durch die Steuerungsvorrichtung (44) regelbaren Fahrgeschwindigkeit (VF) umfasst, **dadurch gekennzeichnet, dass** die Steuerungsvorrichtung (45) dazu ausgeführt und eingerichtet ist, die Auslastung des Antriebsmotors (44) während des Erntebetriebs zu bestimmen und beim Passieren eines in der Steuerungsvorrichtung (45) hinterlegten oder hinterlegbaren ersten Grenzwertes (55) für eine Grenzauslastung des Antriebsmotors (44) die Bandgeschwindigkeit (VL, VR, VM) der Förderbänder (38, 39, 40) des Bandschneidwerks (2) automatisch zu reduzieren.

2. Steuerungsvorrichtung (45) nach Anspruch 1, **dadurch gekennzeichnet, dass** in der Steuerungsvorrichtung (45) ein zweiter Grenzwert (56) für die Grenzauslastung des Antriebsmotors (44) hinterlegt oder hinterlegbar ist, der größer als der erste Grenzwert (55) ist.

3. Steuerungsvorrichtung (45) nach Anspruch 2, **dadurch gekennzeichnet, dass** die Steuerungsvorrichtung (45) dazu eingerichtet ist, beim Erreichen des zweiten Grenzwertes (56) die Fahrgeschwindigkeit (VF) durch die Ansteuerung des Fahrantriebes (44) abzusenken und einen jeweiligen Antriebsstrang (49, 50) von Bandschneidwerk (2) und Fördervorrichtung (5) zu unterbrechen.

4. Steuerungsvorrichtung (45) nach einem der Ansprüche 1 bis 3, **dadurch gekennzeichnet, dass** die Steuerungsvorrichtung (45) dazu eingerichtet ist, beim Erreichen des ersten Grenzwertes (55) die Fahrgeschwindigkeit (VF) durchsatzabhängig abzusenken.

5. Steuerungsvorrichtung (45) nach einem der Ansprüche 1 bis 4, **dadurch gekennzeichnet, dass** die Steuerungsvorrichtung (45) dazu eingerichtet ist, die Antriebsdrehzahl von Messerbalken (35) und Einzugsschnecke (4) des Bandschneidwerks (2) zu verringern.

6. Steuerungsvorrichtung (45) nach Anspruch 5, **dadurch gekennzeichnet, dass** die Steuerungsvorrichtung (45) dazu eingerichtet ist, die Bandgeschwindigkeit (VL, VR, VM) der Förderbänder (38, 39, 40) und die Antriebsdrehzahl von Messerbalken (35) und Einzugsschnecke (4) des Bandschneidwerks (2) durch die Ansteuerung von Aktuatoren (51, 52) zum Antreiben der Förderbänder (38, 39, 40), des Messerbalkens (35) und der Einzugsschnecke (4) unabhängig voneinander zu verändern.

7. Steuerungsvorrichtung (45) nach einem der Ansprüche 1 bis 6, **dadurch gekennzeichnet, dass** die Steuerungsvorrichtung (45) dazu eingerichtet ist, die Fahrgeschwindigkeit (VF) des Mähdreschers (2) durchsatzabhängig zu steuern oder zu regeln.

8. Steuerungsvorrichtung (45) nach einem der Ansprüche 1 bis 7, **dadurch gekennzeichnet, dass** die Steuerungsvorrichtung (45) dazu eingerichtet ist, von einer im Einzugskanal angeordneten Sensoranordnung (8) Signale zur Bestimmung des Erntegutdurchsatzes zu empfangen und auszuwerten.

9. Steuerungsvorrichtung (45) nach einem der Ansprüche 1 bis 8, **dadurch gekennzeichnet, dass** die Steuerungsvorrichtung (45) dazu eingerichtet ist, von zumindest einer dem Mähdrescher (1) zugeordneten Verlustsensoranordnung (57) Signale zur Bestimmung von Erntegutverlusten zu empfangen und auszuwerten und die Fahrgeschwindigkeit (VF) des Mähdreschers (1) in Abhängigkeit von den detektierten Erntegutverlusten zu steuern oder zu regeln.

10. Steuerungsvorrichtung (45) nach einem der Ansprüche 1 bis 9, **dadurch gekennzeichnet, dass** die Steuerungsvorrichtung (45) dazu eingerichtet ist, den Mährescher (1) in unterschiedlichen einstellbaren Fahrmodi zu betreiben, wobei ein Fahrmodus eine konstante Fahrgeschwindigkeit (VF) vorgibt, für welchen eine einzuhaltende Sollfahrgeschwindigkeit vorgegeben wird, ein Fahrmodus einen konstanten Erntegutdurchsatz vorgibt, für welchen ein Sollerntegutdurchsatz vorgegeben wird, um die Fahrgeschwindigkeit (VF) anzupassen, oder ein Fahrmodus einen konstanten Erntegutdurchsatz bei vorgegebenem Verlustniveau vorgibt, für welchen ein Sollerntegutdurchsatz und ein einzuhaltendes Sollverlustniveau vorgegeben wird, um die Fahrgeschwindigkeit (VF) automatisch anzupassen.

11. Selbstfahrender Mähdrescher (1) mit einer Steuerungsvorrichtung (45), **dadurch gekennzeichnet, dass** die Steuerungsvorrichtung (45) nach einem der vorangehenden Ansprüche ausgebildet ist.

12. Selbstfahrender Mähdrescher (1) nach Anspruch 11, **dadurch gekennzeichnet, dass** das Bandschneidwerk (2) einen Messerbalken (35), mehrere angetriebene Förderbänder (38, 39, 40) sowie eine Einzugsschnecke (4) aufweist, wobei der Messerbalken (35) und die Einzugsschnecke (4) mechanisch und die Förderbänder (38, 39, 40) hydraulisch angetrieben sind.

13. Selbstfahrender Mähdrescher (1) nach Anspruch 11 oder 12, **dadurch gekennzeichnet, dass** die angetriebenen Förderbänder (38, 39, 40) des Bandschneidwerks (2) mit voneinander unabhängig einstellbaren Bandgeschwindigkeiten (VL, VR, VM) betreibbar sind.

14. Verfahren zur Ansteuerung eines selbstfahrenden Mähdreschers (1), welcher ein mehrere, mit einer Bandgeschwindigkeit (VL, VR, VM) angetriebene, Förderbänder (38, 39, 40) aufweisendes Bandschneidwerk (2) zur Aufnahme und Förderung von Erntegut zu einer Fördervorrichtung (5) im Einzugskanal des Mähdreschers (1), mehrere dem Einzugskanal nachgeordnete Arbeitsaggregate zur Bearbeitung des aufgenommenen Ernteguts sowie einen Antriebsmotor (44), mit dem das Bandschneidwerk (2), die Arbeitsaggregate sowie ein Fahrantrieb (46) angetrieben werden, umfasst, **dadurch gekennzeichnet, dass** die Auslastung des Antriebsmotors (44) während des Erntebetriebs durch eine Steuerungsvorrichtung (45) bestimmt wird und dass beim Passieren eines in der Steuerungsvorrichtung (45) hinterlegten oder hinterlegbaren ersten Grenzwertes (55) für eine Grenzauslastung des Antriebsmotors (44) die Bandgeschwindigkeit (VL, VR, VM) der Förderbänder (38, 39, 40) des Bandschneidwerks (2) automatisch reduziert wird.
